# DEMANDE DE BREVET EUROPEEN

(11) **EP 0 665 194 A1**
(43) Date de publication de la demande: **02.08.1995**
(21) Numéro de dépôt: 95810036.4
(22) Date de dépôt: 18.01.1995
(51) Int. Cl.: C04B 28/02

(54) **Procédé de fabrication d'un matériau de construction, matériau obtenu par ce procédé et utilisation de ce matériau**

(30) Priorité: 19.01.1994 CH 155/94
(71) Demandeur: Chardonnens, Jean-Louis, CH-1532 Fétigny (CH)
(72) Inventeur: Chardonnens, Jean-Louis, CH-1532 Fétigny (CH); Grossrieder, Louis, CH-1564 Domdidier (CH)
(74) Mandataire: Hranitzky, Wilhelm Max

(57) **Abrégé**

Un matériau de construction, utilisable notamment pour former une couche de fondation et de portance de chaussée, est obtenu en mélangeant des particules de verre avec du ciment et avec une émulsion cationique de bitume. Ce matériau, préparé et appliqué à la température ambiante, est compacté et présente après solidification d'excellentes propriétés mécaniques.

## Description

L'invention a pour objet un procédé de fabrication d'un matériau de construction solidifiable, selon lequel on réalise à la température ambiante un mélange de particules de verre avec du ciment et avec une émulsion aqueuse cationique de bitume de façon à former une masse solidifiable par compactage.

L'invention concerne également le matériau obtenu par ce procédé ainsi que l'utilisation de ce matériau pour la réalisation d'une couche de fondation et de portance de chaussée.

L'invention vise à fournir un matériau de grande qualité et d'un faible prix de revient pouvant être utilisé de manière particulièrement simple et économique dans l'industrie du bâtiment et dans la construction d'ouvrages de génie civil, notamment pour la réalisation d'une couche de fondation et de portance de chaussée.

L'invention a plus particulièrement pour but d'utiliser du verre de récupération comme matière de base, c'est-à-dire un matériau qui est disponible en grande quantité et qui doit d'ailleurs être éliminé d'une façon ou d'une autre.

Le verre utilisé pour la mise en oeuvre du procédé selon l'invention est, de préférence, sous forme de particules ayant une granulométrie de 0,3 à 0,6, c'est-à-dire une taille maximale de 3 à 6 mm. Avantageusement, on emploie du verre obtenu par concassage de bouteilles et autres emballages en verre ainsi qu'éventuellement du verre d'autres provenances tel que des débris de vitres.

Or, il n'était pas possible jusqu'à présent, d'enrober et de lier des particules de verre d'une manière économiquement et techniquement satisfaisante en vue d'une utilisation comme matériau de construction.

L'émulsion aqueuse cationique de bitume utilisée dans le présent procédé, peut être une émulsion obtenue par agitation énergique de bitume chaud dans un milieu aqueux acide en présence d'au moins un sel de diamine et d'au moins un sel de polyamine en tant qu'agents émulsionnants tensio-actifs cationiques.

La composition pondérale de cette émulsion aqueuse cationique de bitume est, de préférence, comprise dans les limites suivantes :

| | |
|---|---|
| Bitume : | 59 à 61 % |
| Diamines : | 0,3 à 0,7 % |
| Polyamines : | 0,3 à 0,7 % |
| la quantité totale d'amines étant de | 0,6 à 1,4 % |
| Acide : | 0,8 à 1,4 % |
| Eau : | Complément à 100 % |

Lesdites diamines et polyamines sont avantageusement des amines aliphatiques ayant 12 à 18 atomes de carbone.

De préférence, la composition pondérale de la masse formée selon le présent procédé est comprise dans les limites suivantes :

| | |
|---|---|
| Emulsion de bitume : | 5 à 7 % |
| Ciment : | 3 à 6 % |
| Verre : | complément à 100 % |

En ce qui concerne la présente émulsion de bitume, l'acide utilisé pour former les sels de diamine et de polyamine peut être minéral ou organique. Par exemple, cet acide peut être l'acide chlorhydrique.

Il est à noter que le temps de rupture de l'émulsion de bitume varie en fonction de la température, pour une composition donnée de cette émulsion. Plus précisément, le temps de rupture est plus long à basse température qu'à température élevée.

On peut adapter le temps de rupture de l'émulsion de bitume à température donnée, en faisant varier la proportion de polyamines par rapport à la teneur en acide. Plus précisément, lorsque l'on augmente cette proportion, le temps de rupture augmente pour une température donnée.

Par conséquent, il est possible d'optimiser le temps de rupture de l'émulsion selon la température d'utilisation, c'est-à-dire selon la saison, en dosant convenablement la quantité de polyamines.

Il est particulièrement avantageux de préparer d'abord un mélange de particules de verre et de ciment et d'ajouter ensuite l'émulsion de bitume audit mélange. A cet effet, on peut utiliser un malaxeur du genre habituellement employé pour la préparation des matériaux de revêtement routier et des matériaux utilisés dans l'industrie du bâtiment.

L'utilisation du matériau obtenu par le procédé qui vient d'être décrit comme mortier bitumineux pour la réalisation d'une couche de fondation et de portance de chaussée est caractérisée par le fait que l'on applique au moins une couche de ce matériau sur le sol et que l'on compacte le matériau ainsi appliqué de façon à provoquer la rupture de l'émulsion de bitume, ces opérations étant effectuées à la température ambiante.

Pour effectuer ledit compactage, on peut procéder de la manière habituelle, en utilisant les machines normalement employées pour la réalisation des revêtements routiers, de préférence des compacteurs à pneumatiques lisses, en effectuant par exemple 5 à 6 passages avec une charge de 16 tonnes.

En raison du fait que le matériau selon l'invention peut être utilisé à la température ambiante, on réalise une importante économie d'énergie, tout en réduisant la pollution atmosphérique, par rapport à l'emploi des matériaux de revêtement routiers bitumineux classiques qui nécessitent un chauffage aussi bien pendant leur transport que lors de leur application.

Il s'avère que la résistance à la déformation d'une chaussée comprenant une couche de fondation et de portance obtenue grâce à la mise en oeuvre de l'invention est accrue de plus de 50% par rapport à celle d'une grave classique. En d'autres termes, une couche de fondation et de portance ayant une épaisseur de l'ordre de 20 à 30 cm, réalisée par compactage du matériau fabriqué selon le procédé conforme à l'invention, peut remplacer une couche usuelle de gravier de 60 cm d'épaisseur. Il en résulte clairement une importante économie de main d'oeuvre et de matériel.

Par ailleurs, il est à noter que, dans le matériau selon l'invention, I'affinité du bitume vis-à-vis des particules de verre est très forte, ce qui confère aux couches de fondation réalisées une résistance à la rupture particulièrement élevée ainsi qu'une excellente tenue à l'action de l'humidité aussi bien lors de l'application de ces couches que postérieurement à leur application.

Exemple : On ajoute à un mélange de particules de verre ayant une granulométrie de 0,5, c'est-à-dire une taille maximale de 5 mm, obtenues par concassage de bouteilles et d'emballages en verre non-réutilisables, et de ciment, une émulsion aqueuse cationique de bitume ayant la composition suivante (en pourcentage pondéral) :

| | |
|---|---|
| Bitume : | 60 |
| Diamines : | 0,5 |
| Polyamines : | 0,5 |
| Acide chlorhydrique : | 1 |
| Eau : | 38 |

Les quantités d'émulsion de bitume, de particules de verre et de ciment sont les suivantes (en pourcentage pondéral) :

| | |
|---|---|
| Emulsion de bitume : | 6 |
| Ciment : | 4 |
| Verre : | 90 |

Le tout est malaxé à la température ambiante.

Le matériau obtenu par compactage de la masse ainsi préparée, a une résistance à la rupture de 70 kg/cm².

On comprendra aisément que le matériau obtenu par le procédé selon l'invention est susceptible d'être employé dans de nombreux domaines d'application, outre l'utilisation pour la réalisation d'une couche de fondation de chaussée qui a été spécifiquement décrite. Par exemple, ce matériau peut être également employé pour la fabrication d'éléments et de structures de construction, dans l'industrie du bâtiment, notamment sous forme de panneaux acoustiques.

## Revendications

1. Procédé de fabrication d'un matériau de construction solidifiable, caractérisé en ce que l'on réalise à la température ambiante un mélange de particules de verre avec du ciment et avec une émulsion aqueuse cationique de bitume de façon à former une masse solidifiable par compactage.

2. Procédé selon la revendication 1, caractérisé en ce que les particules de verre sont obtenues par concassage de verre de récupération et ont une granulométrie de 0,3 à 0,6.

3. Procédé selon la revendication 1, caractérisé en ce que la composition pondérale de la masse formée est comprise dans les limites suivantes :
| | |
|---|---|
| Emulsion de bitume : | 5 à 7 % |
| Ciment : | 3 à 6 % |
| Verre : | Complément à 100 % |

4. Procédé selon l'une des revendications 1 à 3, caractérisé en ce que l'on utilise, comme émulsion aqueuse cationique de bitume, une émulsion obtenue en utilisant en tant qu'agent émulsionnant tensio-actif, au moins un sel de diamine et au moins un sel de polyamine, la composition pondérale de cette émulsion étant comprise dans les limites suivantes :
| | |
|---|---|
| Bitume : | 59 à 61 % |
| Diamines : | 0,3 à 0,7 % |
| Polyamines : | 0,3 à 0,7 % |
| la quantité totale d'amines étant de | 0,6 à 1,4 % |
| Acide(s) : | 0,8 à 1,4 % |
| Eau : | Complément à 100 % |

5. Procédé selon la revendication 4, caractérisé en ce que ledit acide est l'acide chlorhydrique.

6. Procédé selon l'une des revendications précédentes, caractérisé en ce que l'on mélange d'abord les particules de verre et le ciment, puis on ajoute à ce mélange l'émulsion de bitume.

7. Matériau obtenu par le procédé selon la revendication 1.

8. Utilisation du matériau obtenu par le procédé selon la revendication 1 comme mortier bitumineux pour la réalisation d'une couche de fondation et de portance de chaussée, caractérisée en ce que l'on applique au moins une couche de ce matériau sur le sol et que l'on compacte le matériau ainsi appliqué de façon à provoquer la rupture de l'émulsion de bitume, cette opération étant effectuée à la température ambiante.

9. Utilisation selon la revendication 8, caractérisée en ce que l'émulsion de bitume contient une quantité de polyamines et une quantité d'acide dosées en fonction de la température ambiante que l'on prévoit pour l'utilisation du matériau sur le chantier.
